# EUROPEAN PATENT APPLICATION

(11) **EP 4 382 579 A1**
(43) Date of publication of application: **12.06.2024**
(21) Application number: 22853139.8
(22) Date of filing: 04.08.2022
(51) Int. Cl.: C09D 11/16, B43K 7/00, B43K 8/02

(54) **AQUEOUS INK COMPOSITION FOR WRITING INSTRUMENTS**

(30) Priority: 06.08.2021 JP 2021129797; 13.01.2022 JP 2022003924
(71) Applicant: MITSUBISHI PENCIL COMPANY, LIMITED, Tokyo 140-8537 (JP)
(72) Inventor: KOMETANI Aya, Tokyo 140-8537 (JP); OGURA Kosuke, Tokyo 140-8537 (JP)
(74) Representative: Vossius & Partner Patentanwälte Rechtsanwälte mbB
(86) International application number: PCT/JP2022/029897
(87) International publication number: WO 2023/013721

(57) **Abstract**

Provided is an aqueous ink composition for a writing instrument that can provide a handwriting formed by writing and capable of withstanding repeated scratching and scratching with a stronger force, and a writing instrument charged with the aqueous ink composition. An aqueous ink composition for a writing instrument of the present invention includes, at least, a colorant (A) containing a pigment, olefin-based resin particles (B), and
water, wherein the olefin-based resin particles (B) have a penetration method hardness of 1 or more and an average particle size of 15 um or less as measured by a Coulter counter method, and a solid content mass ratio [(A)/(B)] between the colorant (A) and the olefin-based resin particles (B) is in a range of 1 to 100.

## Description

### Technical Field

The present invention relates to an aqueous ink composition for a writing instrument that can provide a handwriting formed by writing and capable of withstanding repeated scratching and scratching with a stronger force and that does not cause blurring or poor appearance at the time of writing due to generation of bubbles.

### Background Art

Examples of known aqueous ink compositions for a writing instrument which provide excellent fixability, decreased abrasion of a ball seat, thick handwriting, and good scratch resistance include:
1) as an ink composition which is easily erasable even when writing under high writing pressure and exhibits excellent fixability, an erasable ink composition including at least a colorant and an adhesive resin, wherein the colorant has an average particle size of 2 µm or more, and the adhesive resin contains 30 wt% or more of particles having a particle size of 2 µm or less in the adhesive resin (see, for example, Patent Document 1);
2) as an aqueous ballpoint pen which has decreased leakage of ink, decreased abrasion of a ball seat, and thick handwriting, an aqueous ballpoint pen in which a ballpoint pen tip rotatably holding a ball at the tip end of an ink housing cylinder is mounted directly or via a tip holder and an ink composition for an aqueous ballpoint pen including at least water, a colorant, organic resin particles that are olefin-based resin particles and/or nitrogen-containing resin particles, and a shear thinning agent is housed in the ink housing cylinder, wherein an amount of movement of the ballpoint pen tip in the axial direction of the ball is 15 pm or more and the organic resin particles having an average particle size of 15 µm or less (see, for example, Patent Document 2); and
3) as an aqueous pigment ink composition with which a drawn line written on a non-absorption surface such as a PET film realizes excellent scratch resistance as compared with a drawn line written with a conventional felt pen, an aqueous pigment ink composition for a writing instrument containing a pigment, water, a dispersion resin, a silicone-based resin emulsion, and a resin emulsion other than the silicone-based resin emulsion, wherein the silicone-based resin emulsion and the resin emulsion other than the silicone-based resin emulsion are used in combination in an amount such that the solid content mass ratio thereof is within a range of the silicone-based resin emulsion/the resin emulsion other than the silicone-based resin emulsion = 0.1 to 0.8, and a viscosity when measured using a cone and plate type rotational viscometer under conditions of 25°C and 50 rpm is more than 2.0 mPa·s and 8 mPa·s or less (see, for example, Patent Document 3).

However, the ink compositions for a writing instrument disclosed in Patent Documents 1 and 3 each contain an adhesive resin, a silicone-based resin emulsion, and a resin emulsion other than the silicone-based resin emulsion to improve scratch resistance and the like. However, the scratch resistance is still insufficient on a writing surface, for example, a paper surface through which aqueous ink is difficult to permeate, such as an inkjet postcard paper or a slightly coated paper. An aqueous ink composition for a writing instrument that can provide a handwriting formed by writing on the writing surface including these paper surfaces, the handwriting being capable of withstanding repeated scratching and scratching with a stronger force is desired at present.

The ink composition for a writing instrument of Patent Document 2 is partially common in that olefin-based resin particles are used, but is different from the present invention in terms of problems and technical ideas (configuration and effects) of the invention.

On one hand, known aqueous ink compositions for writing instruments have problems such as blurring and poor appearance at the time of writing due to generation of bubbles. These problems are caused by, for example, occurrence of cavitation in the ink due to an impact caused by drop of the pen body or due to a knock impact in the case of a retractable ballpoint pen, whereby generation of bubble is accelerated. In addition, the minute bubbles once generated are united and enlarged with time to become large bubbles and remain in the ink and the pen body, thereby causing a problem that writing performance is adversely affected.

As problems caused by these bubbles, for example, a problem of blurring at the time of writing due to entry of bubbles into a pen tip, and in the case of a ballpoint pen, a problem of poor appearance due to accumulation of enlarged bubbles at an ink-follower interface often occur.

In the related art, for an aqueous ink composition for a writing instrument, defoaming treatment or the like is commonly performed at the time of production of the composition, but the above-described problems caused by bubbles occur in the case of being used in an aqueous ballpoint pen or the like.

On the other hand, examples of known technologies that refer to a dissolved oxygen concentration in an aqueous ink composition for a writing instrument include:
4) an aqueous ink including an ink composition containing at least a colorant, a water-soluble organic solvent, and water, wherein an amount of dissolved gas in the ink is in an unsaturated state (3 mg/l or less based on the amount of dissolved oxygen, 20°C) (see Patent Document 4, for example);
5) an aqueous ballpoint pen containing an aqueous ink composition containing a colorant, water, and a monomer or oligomer of 2,5-dimercapto-1,3,4-thiadiazole, the pen including an ink back-flow preventer that follows with a consumption of the ink, the preventer being disposed in close contact with a rear end of the ink, wherein an amount of oxygen dissolved in the aqueous ink composition at 20°C is 0.1 to 10 mg/L (see Patent Document 5, for example); and
6) an ink composition for a ballpoint pen, the composition containing at least water, an organic solvent, a colorant, a compound containing a sulfide group and/or a disulfide group, and a saccharide, having an ink viscosity of 500 mPa·s or less at 25°C and a shear rate of 2500 sec⁻¹, and having an amount of dissolved oxygen of 4.0 mg/L or less (see Patent Document 6, for example).

However, in the ink compositions for writing instruments and the like of Patent Documents 4 to 6, sufficient effects may not be obtained over a long period of time under severe conditions only by specifying the amount of dissolved oxygen, and the generation of bubbles is suppressed by a chemical removal action or the like by blending a monomer of 2,5-dimercapto-1,3,4-thiadiazole, a saccharide, or the like as in Patent Documents 5 and 6, but it cannot be said that sufficient effects are obtained, and further improvements and the like are desired.

### Citation List

### Patent Document

Patent Document 1: JP 2004-26926 A (Claims, Examples, and the like)
Patent Document 2: JP 2016-124179 A (Claims, Examples, and the like)
Patent Document 3: JP 2019-14769 A (Claims, Examples, and the like)
Patent Document 4: JP H8-183923 A (Claims, Examples, and the like)
Patent Document 5: JP 2009-234093 A (Claims, Examples, and the like)
Patent Document 6: JP 2017-201000 A (Claims, Examples, and the like)

### Summary of Invention

### Technical Problem

The present invention has been made to solve these problems in view of the problems of the related art, current state, and the like described above. An object of the present invention is to provide an aqueous ink composition for a writing instrument that can provide a handwriting formed by writing on a writing surface, which is capable of withstanding repeated scratching and scratching with a stronger force, without blurring or poor appearance at the time of writing due to generation of bubbles, on the writing surface including a normal writing surface and a paper surface or the like through which aqueous ink hardly permeates, such as an ink jet postcard paper or a slightly coated paper.

### Solution to Problem

The inventors of the present invention have conducted extensive studies in view of the above-described problems in the related art and found that an aqueous ink composition for a writing instrument, in particular, an aqueous ink composition for a ballpoint pen that achieves the above-described object can be obtained by including olefin-based resin particles having specific physical properties in a blending system containing at least a colorant containing a pigment, and water, and have completed the present invention.

That is, an aqueous ink composition for a writing instrument, in particular, an aqueous ink composition for a ballpoint pen of the present invention includes at least a colorant (A) containing a pigment, olefin-based resin particles (B), and water, wherein the olefin-based resin particles (B) have a penetration method hardness of 1 or more and an average particle size of 15 pm or less as measured by a Coulter counter method, and a solid content mass ratio [(A)/ (B)] between the colorant (A) and the olefin-based resin particles (B) is in a range of 1 to 100.

A content of the olefin-based resin particles (B) is preferably 0.01 to 20 mass% with respect to a total amount of the ink composition. A viscosity (25°C) of the aqueous ink composition for a writing instrument at a shear rate of 383 sec⁻¹ is preferably 80 mPa ·s or less. A dissolved oxygen concentration in the aqueous ink composition for a writing instrument is preferably 5%O₂ or more.

A surface tension of the aqueous ink composition for a writing instrument is preferably 15 to 60 mN/m.

A writing instrument of the present invention, in particular, a ballpoint pen of the present invention is charged with the aqueous ink composition for a writing instrument having the composition described above.

### Advantageous Effects of Invention

According to the present invention, provided are an aqueous ink composition for a writing instrument that can provide a handwriting formed by writing on a writing surface and capable of withstanding repeated scratching and scratching with a stronger force, without blurring or poor appearance at the time of writing due to generation of bubbles, the writing surface including a normal writing surface and a paper surface or the like through which aqueous ink hardly permeates, such as an ink jet postcard paper or a slightly coated paper, and also provides a writing instrument, particularly a ballpoint, that are charged with the aqueous ink composition for a writing instrument. The object and effects of the present invention can be recognized and obtained especially by using the components and combination indicated in the claims. Both of general explanation described above and detailed explanation described below are exemplification and explanation and do not limit the present invention described in claims .

### Brief Description of Drawings

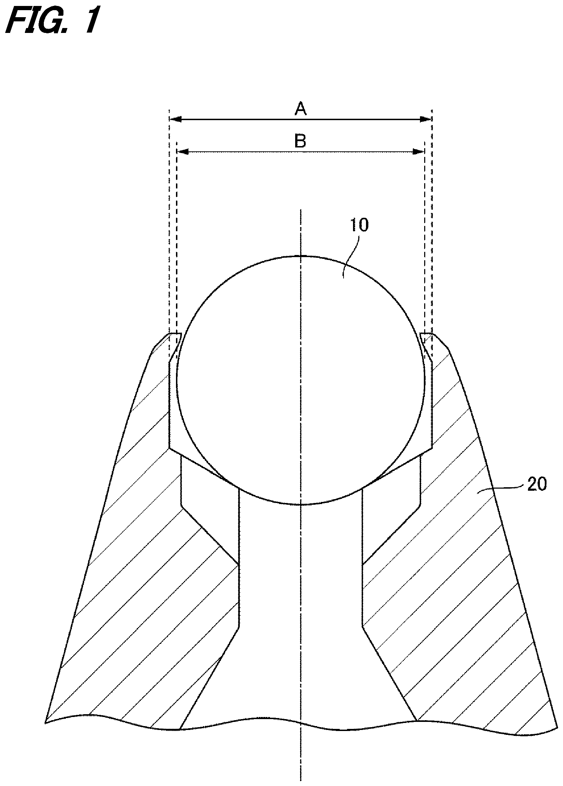

FIG. 1 is an explanatory view for describing the structure and the like of a ballpoint pen tip when the present invention is applied to a ballpoint pen as an example of a writing instrument.

### Description of Embodiments

An embodiment of the present invention is described below in detail. However, note that the technical scope of the present invention is not limited to the embodiments described below and includes the invention described in Claims and equivalents thereof.

An aqueous ink composition for a writing instrument of the present invention includes, at least, a colorant (A) containing a pigment, olefin-based resin particles (B), and water, wherein the olefin-based resin particles (B) have a penetration method hardness of 1 or more and an average particle size of 15 pm or less as measured by a Coulter counter method, and a solid content mass ratio [(A) / (B)] between the colorant (A) and the olefin-based resin particles (B) is in a range of 1 to 100.

The colorant (A) used in the present invention is a colorant containing a pigment. Known inorganic pigment systems such as titanium oxide and organic pigment systems , resin particle pigments containing pigments, pseudo-pigments obtained by coloring a resin emulsion with a dye, white plastic pigments, pigments obtained by multilayer coating on the surface layer of silica or mica as a base material with iron oxide or titanium oxide, aluminum pigments, thermochromic pigments, photochromic particles, and any dyes that dissolve or disperse in water can be used without limitation.

Examples of the inorganic pigment that can be used include azo lake, insoluble azo pigments, chelate azo pigments, phthalocyanine pigments, perylene or perinone pigments, and nitroso pigments. More specific examples of the inorganic pigment include inorganic pigments such as carbon black, titanium black, zinc white, red iron oxide, aluminum, chrome oxide, iron black, cobalt blue, yellow iron oxide, viridian, zinc sulfide, lithopone, cadmium yellow, vermilion, cadmium red, chrome yellow, molybdate orange, zinc chromate, strontium chromate, white carbon, clay, talc, ultramarine, precipitated barium sulfate, baryta powder, calcium carbonate, lead white, navy white, iron blue, manganese violet, aluminum powder, and brass powder, C.I. Pigment Blue 17, C.I. Pigment Blue 15, C.I. Pigment Blue 17, C.I. Pigment Blue 27, C.I. Pigment Red 5, C.I. Pigment Red 22, C.I. Pigment Red 38, C.I. Pigment Red 48, C.I. Pigment Red 49, C.I. Pigment Red 53, C.I. Pigment Red 57, C.I. Pigment Red 81, C.I. Pigment Red 104, C.I. Pigment Red 146, C.I. Pigment Red 245, C.I. Pigment Yellow 1, C.I. Pigment Yellow 3, C.I. Pigment Yellow 12, C.I. Pigment Yellow 13, C.I. Pigment Yellow 14, C.I. Pigment Yellow 17, C.I. Pigment Yellow 34, C.I. Pigment Yellow 55, C.I. Pigment Yellow 74, C.I. Pigment Yellow 95, C.I. Pigment Yellow 166, C.I. Pigment Yellow 167, C.I. Pigment Orange 5, C.I. Pigment Orange 13, C.I. Pigment Orange 16, C.I. Pigment Violet 1, C.I. Pigment Violet 3, C.I. Pigment Violet 19, C.I. Pigment Violet 23, C.I. Pigment Violet 50, and C.I. Pigment Green 7.

The aluminum pigments that can be used are roughly classified into leafing type and non-leafing type depending on the type of grinding aid, and these can be used individually or in combination. Examples of commercially available products include ALPASTE 1100MA, CS420, and CS460, which are of non-leafing type, WXM series in which an aluminum surface is rust-proofed with a phosphorous-based compound, WL series in which an aluminum surface is rust-proofed with a molybdenum compound, EMR series in which an aluminum flake surface is coated with dense silica (all available from Toyo Aluminium K.K.), and SW-120PM (available from Asahi Kasei Chemicals Corporation).

Examples of the thermochromic pigment that can be used include a thermochromic pigment produced by microencapsulating a thermochromic composition containing at least a leuco dye functioning as a color former, a color developer serving as a component having an ability to develop a color of the leuco dye, and a discoloration temperature adjusting agent capable of controlling a discoloration temperature in coloring of the leuco dye and the color developer such that the thermochromic composition has a predetermined average particle size.

Examples of the photochromic particles that can be used include photochromic particles composed of at least one or more selected from photochromic dyes (compound), fluorescent dyes, and the like and a resin such as a terpene phenol resin, and photochromic particles produced by microencapsulating a photochromic composition containing at least one or more selected from photochromic dyes (compound), fluorescent dyes, and the like, an organic solvent, and an additive such as an antioxidant, a light stabilizer, or a sensitizer to have a predetermined average particle size.

In the present invention (including the Examples), the "average particle size of the colorant" is a value of D50 measured by a particle size analyzer [Microtrac HRA9320-X100 (available from Nikkiso Co., Ltd.)] or a value of an average particle size obtained by cumulant method analysis in a scattering intensity distribution calculated using a concentrated particle size analyzer FPAR-1000 (available from Otsuka Electronics Co., Ltd.).

Examples of the method for microencapsulating the thermochromic pigment include interfacial polymerization, interfacial polycondensation, in situ polymerization, in-liquid curing coating, phase separation from an aqueous solution, phase separation from an organic solvent, melt dispersion cooling, air suspension coating, and spray drying. The method may be selected as appropriate according to the intended use. For example, in the phase separation from an aqueous solution, a leuco dye, a developer, and a discoloration temperature adjusting agent are melted by heating, added to an emulsifier solution, and dispersed in the form of oil droplets under heating and stirring. Subsequently, as a capsule membrane material, a resin raw material having a wall membrane of, for example, an urethane resin, an epoxy resin, or an amino resin, such as an amino resin solution, specifically, a methylol melamine aqueous solution, an urea solution, or a benzoguanamine solution, is added gradually, and the mixture is allowed to react continuously to prepare a dispersion, and then the dispersion is filtered, whereby a thermochromic microcapsule pigment can be obtained. In this thermochromic pigment, the coloring and decoloring temperatures of each color can be set to appropriate temperatures by appropriately combining the types and amounts of the leuco dye, the developer, and the discoloration temperature adjusting agent.

Microencapsulation of the photochromic particles may be performed in the same manner as in the above-described preparation of the thermochromic resin particles.

The photochromic particles can be made colorless in an indoor lighting environment (indoor lighting equipment selected from incandescent light, fluorescent light, lamps, white LED, and the like) and develop a color in an environment irradiated with UV (an environment irradiated with a wavelength at 200 to 400 nm, or sunlight including UV) through the appropriate use of dyes such as photochromic dyes (compounds) and fluorescent dyes.

Examples of the dye that can be used include acid dyes such as Eosin, Phloxine, Water Black R445, Yellow #6-C, Water Yellow #6-C, Acid Red, Water Blue #105, Brilliant Blue FCF, and Nigrosine NB; direct dyes such as Direct Black 154, Direct Sky Blue 5B, and Violet BB; and basic dyes such as rhodamine and methyl violet.

These colorants (A) may be used alone or in combination of two or more thereof. Of these colorants (A), all of the colorants may be pigments, and the average particle size of the pigment such as a pigment dispersed in water, a resin particle pigment, a pseudo pigment, a white plastic pigment, a multilayer-coated pigment, an aluminum pigment, a thermochromic pigment, photochromic particles, and the like varies depending on the ball diameter, ink composition, viscosity, and the like, and the average particle size is desirably 0.05 to 20 µm.

The content of the colorant (A) can be appropriately increased and/or decreased based on the drawing line concentration of the ink, and in the present invention, the solid content mass ratio [(A) / (B)] of the olefin-based resin particles (B) and the colorant (A) used needs to be optimized as described later. The ratio is desirably 0.1 to 30 mass% (hereinafter, "mass%" is simply referred to as "%") with respect to the total amount of the ink composition.

The olefin-based resin particles (B) used in the present invention have a penetration method hardness of 1 or more and an average particle size of 15 µm or less as measured by a Coulter counter method.

By using the olefin-based resin particles having such characteristics, as the effect of the present invention, it is possible to provide a handwriting formed by writing, which is capable of withstanding repeated scratching and scratching with a stronger force, and does not have blurring or poor appearance at the time of writing due to generation of bubbles (these effects will be further described later) .

Olefin-based resin particles having a penetration method hardness of less than 1 or having an average particle size of more than 15 pm as measured by a Coulter counter method cannot exhibit the effect of the present invention.

From the viewpoint of further improving the effect of the present invention, it is desirable to use olefin-based resin particles (B) having a penetration method hardness of 1 or more and an average particle size of 10 pm or less as measured by a Coulter counter method. The "penetration method hardness" in the present invention (including the Examples described later) is a value measured in accordance with JIS K2207.

The shape, structure, and the like of the olefin-based resin particles that can be used are not particularly limited as long as the olefin-based resin particles have the properties described above, that is, having a penetration method hardness of 1 or more and an average particle size of 15 pm or less as measured by a Coulter counter method. Examples of commercially available products include CHEMIPEARL W100, W200, W400, and W500 available from Mitsui Chemicals, Inc. CHEMIPEARL W300, W308, W310, W700, W900, and the like do not satisfy the properties described above (e.g., penetration method hardness) even though they are olefin-based resin particles of the same type (CHEMIPEART, products).

The content of these olefin-based resin particles (B) is desirably 0.01 to 20 mass%, and preferably 1 to 5 mass% with respect to the total amount of the ink composition.

When the content of the olefin-based resin particles (B) is less than 0.01 mass%, the effect of the present invention cannot be sufficiently realized, and on the other hand, when the content is more than 20 mass%, defects such as writing blur may occur.

In the present invention, the solid content mass ratio [(A)/(B)] between the colorant (A) and the olefin-based resin particles (B) needs to be in a range of 1 to 100. When the solid content mass ratio [(A) / (B)] is out of the above range (less than 1 or more than 100), the effect of the present invention cannot be exhibited.

From the viewpoint of further exhibiting the effect of the present invention, it is desirable that the solid content mass ratio [(A) / (B)] is 1.0 or more and 100.0 or less, preferably 2.0 or more and 60.0 or less, and most preferably 2.0 to 30.0.

The aqueous ink composition for a writing instrument of the present invention preferably contains, in addition to the colorant (A) containing a pigment and the olefin-based resin particles (B), a water-soluble solvent, and water (tap water, purified water, distilled water, ion-exchanged water, pure water, and the like) as a solvent as a balance, and may appropriately contain a dispersant, a lubricant, a thickener, a pH adjuster, a rust inhibitor, an antiseptic agent, a bacteriostatic agent, or the like depending on the use of the writing instrument (for ballpoint pens, marking pens, and the like) as long as the effect of the present invention is not impaired.

Examples of the water-soluble solvent that can be used include glycols such as ethylene glycol, diethylene glycol, triethylene glycol, propylene glycol, polyethylene glycol, 3-butylene glycol, thiodiethylene glycol, and glycerin; ethylene glycol monomethyl ether, and diethylene glycol monomethyl ether. These solvents may be used alone or as a mixture. The amount of the water-soluble solvent is preferably 5 to 40% with respect to the total amount of the ink composition.

For the dispersant that can be used in the present invention, it is necessary to appropriately select and blend a water-soluble polymer dispersant, a surfactant, or the like.

Examples of the water-soluble polymer dispersant include polyacrylic acid, an acrylic acid copolymer, and a maleic acid resin. Specifically, a resin such as an acrylic resin, a styrene-acrylic acid resin, or a styrene-maleic acid resin is converted into a salt form to be water-soluble and used. Typical examples of the alkali metal forming the salt include sodium and potassium, and typical examples of the amine include aliphatic primary to tertiary amines such as mono-, di-, or trimethylamine, alcohol amines such as mono-, di-, or tripropanolamine, methylethanolamine, methylpropanolamine, and dimethylethanolamine, ammonia, morpholine, and N-methylmorpholine.

Examples of the surfactant serving as a dispersant include nonionic surfactants and anionic surfactants.

Examples of the nonionic surfactant include polyoxyalkylene higher fatty acid esters, higher fatty acid partial esters of polyhydric alcohols, and higher fatty acid esters of sugar. Specific examples thereof include fatty acid esters of glycerin, polyglycerin fatty acid esters, propylene glycol fatty acid esters, pentaerythritol fatty acid esters, polyoxyethylene sorbitan fatty acid esters, polyoxyethylene sorbitol fatty acid esters, polyoxyethylene glycerin fatty acid esters, polyethylene glycol fatty acid esters, polyoxyethylene alkyl ethers, polyoxyethylene phytosterols, polyoxyethylene polyoxypropylene alkyl ethers, polyoxyethylene alkylphenyl ethers, polyoxyethylene styrenated phenyl ethers, polyoxyethylene distyrenated phenyl ethers, polyoxyethylene castor oil, polyoxyethylene lanolin, polyoxyethylene lanolin alcohol, polyoxyethylene alkylamines, polyoxyethylene fatty acid amides, and polyoxyethylene alkylphenyl formaldehyde condensates.

Examples of the anionic surfactant include alkylated sulfonates of higher fatty acid amides, alkyl aryl sulfonates, and naphthalenesulfonic acid-formaldehyde condensates, and specific examples thereof include alkyl sulfates, polyoxyethylene alkyl ether sulfates, N-acylamino acid salts, N-acylmethyltaurine salts, polyoxyethylene alkyl ether acetates, alkyl phosphates, and polyoxyethylene alkyl ether phosphates.

These dispersants are not particularly limited as long as they can further improve the dispersibility of the pigment, and these dispersants may be used alone or in combination of two or more thereof.

Examples of the lubricant that can be used include nonionic types such as fatty acid esters of polyhydric alcohols, higher fatty acid esters of sugars, polyoxyalkylene higher fatty acid esters, and alkyl phosphate esters; anionic types such as phosphate, alkyl sulfonates of higher fatty acid amides, and alkyl aryl sulfonates; derivatives of polyalkylene glycols, and polyether modified silicones, which are also used as surface treating agents for pigments.

As the thickener that can be used, for example, at least one selected from the group consisting of synthetic polymers, cellulose, and polysaccharides is preferred. Specific examples thereof include arabic gum, tragacanth gum, guar gum, locust bean gum, alginic acid, carrageenan, gelatin, xanthan gum, welan gum, succinoglycan, diutan gum, dextran, methyl cellulose, ethyl cellulose, hydroxyethyl cellulose, carboxymethyl cellulose, fermented cellulose, oxidized cellulose, crystalline cellulose, starch glycolic acid and salts thereof, polyvinylpyrrolidone, polyvinyl methyl ether, polyacrylic acid and salts thereof, polyethylene oxide, copolymers of vinyl acetate and polyvinylpyrrolidone, and styrene-acrylic acid copolymers and salts thereof.

Examples of the pH adjuster include ammonia, urea, monoethanolamine, diethanolamine, triethanolamine, alkali metal salts of carbonic acid and phosphoric acid such as sodium tripolyphosphate and sodium carbonate, and hydrates of alkali metals such as sodium hydroxide. Furthermore, examples of the corrosion inhibitor include benzotriazole, tolyltriazole, dicyclohexylammonium nitrite, and saponins. Examples of the preservative or antibacterial agent include phenol, omadine sodium, sodium benzoate, thiazoline-based compounds, and benzimidazole compounds.

For the components, such as the dispersant, the lubricant, the thickener, the pH adjuster, the corrosion inhibitor, the preservative, or the antibacterial agent, one type may be used alone, or a combination of two or more types of these may be used. Commercially available products of these polysaccharides, if present, can be used.

In addition, a pH level of the aqueous ink composition for a writing instrument of the present invention (at 25°C) is adjusted to preferably 5 to 10, further preferably 6 to 9.5, by using a pH adjuster or the like from the viewpoint of usability, safety, stability of the ink itself, and matching with the ink container.

The aqueous ink composition for a writing instrument of the present invention preferably has a viscosity of 80 mPa·sec or less, more preferably 50 mPa ·sec or less, and particularly preferably in a range of 5 to 20 mPa·sec, at 25°C and a shear rate of 383 sec⁻¹.

When the viscosity exceeds 80 mPa·s at the above-described shear rate and the viscosity is high, the ink flow rate decreases, the writing feeling becomes heavy, and smooth writing becomes difficult, and on the other hand, when the viscosity is 5 mPa·sec or more, the effect of suppressing bleeding of handwriting and strike-through is likely to be exhibited.

Desirably, the surface tension of the aqueous ink composition for a writing instrument of the present invention is preferably 15 to 60 mN/m, more preferably 20 to 50 mN/m, and most preferably 30 to 45 mN/m from the viewpoint of leveling properties.

In the present invention (including Examples described later), the surface tension (25°C) of the ink refers to a value measured by a surface tension measuring apparatus: CBVP-Z available from Kyowa Interface Science Co., Ltd.

The dissolved oxygen concentration in the aqueous ink composition for a writing instrument of the present invention is preferably 5%O₂ or more because the aqueous ink composition for a writing instrument can alleviate metal corrosion in metal parts such as a pen tip and an ink container, specifically, reduces a corrosion reaction of a metal base due to an oxide film on a metal surface owing to the presence of oxygen at an interface where the metal is in contact with the ink.

The present invention is particularly expected to suppress writing blur due to bubbles after storage under low temperature conditions. Since air is easily dissolved in the ink under low temperature conditions, when the ink is transferred to a normal temperature environment and writing is performed after an impact of dropping or knocking is applied, the undissolved air forms minute bubbles in the ink and is accumulated in a joint or the like, which may block an ink flow path and cause writing failure.

The range of the viscosity value at the shear rate and the range of the surface tension can be adjusted by suitably combining the colorant including a pigment to be used, the olefin-based resin particles, the water-soluble solvent, and the like, suitably adjusting each content thereof, and further selecting a suitable kneading method and the like. The dissolved oxygen concentration can be adjusted to 5%O₂ or more by adding a bubble inhibitor or by stirring conditions during production of the ink.

The bubble inhibitor that can be used may be any known bubble inhibitor that are typically used, and at least one of cysteine and derivatives thereof, glutathione and derivatives thereof, hydroxylamine, derivatives of hydroxylamine, ascorbic acid, derivatives of ascorbic acid, erythorbic acid, derivatives of erythorbic acid, and salts thereof, oligomers of N-vinyl-2-pyrrolidone, and the like may be used. The content of the bubble inhibitor is preferably in a range of 0.01 to 5.0 mass% with respect to the total amount of the ink composition to adjust the dissolved oxygen concentration.

The aqueous ink composition for a writing instrument of the present invention can be produced without any particular change as compared to the production methods for other aqueous ink compositions.

That is, the aqueous ink composition for a writing instrument of the present invention can be produced by appropriately combining at least the colorant (A) containing a pigment, the olefin-based resin particles (B), a water-soluble solvent, water as a solvent as a balance, and other components according to the application of the ink for a writing instrument (for ballpoint pens, marking pens, and the like), mixing and stirring the mixture using a mixer, for example, a bead mill, a homomixer, a homogenizer, or the like that is capable of applying strong shear under stirring conditions set to suitable conditions, , and further removing coarse particles in the ink composition by filtration or centrifugation as necessary.

The aqueous ink composition for a writing instrument of the present invention is loaded in a ballpoint pen, a marking pen, a felt pen, or the like provided with a pen tip such as a ballpoint pen tip, a fiber tip, a felt tip, and a plastic tip. The structures of the ballpoint pen, the marking pen, the felt pen, and the like are not particularly limited, and the ballpoint pen, the marking pen, and the like may be, for example, a direct liquid type pen provided with a collector structure (ink holding mechanism) using a shaft cylinder itself as an ink container in which the shaft cylinder is filled with the aqueous ink composition for a writing instrument having the composition described above.

A preferred embodiment of the present invention is a ballpoint pen charged with the aqueous ink composition for a writing instrument described above.

In an aqueous ballpoint pen body, air is likely to be entrained from a ballpoint pen tip at a pen tip during writing, and the air (including oxygen) taken in from the pen tip is dissolved in ink, which is likely to cause further generation of bubbles.

However, the aqueous ink composition for a writing instrument of the present invention contains particularly soft olefin-based resin particles having a penetration method hardness of 1 or more. Thus, in the aqueous ballpoint pen of the present invention charged with the aqueous ink composition for a writing instrument containing the olefin-based resin particles, the resin particles in the ink composition flow between the ball house of the ballpoint pen tip and the ball without being fixed or attached. Thus, the ballpoint pen using the aqueous ink composition for a writing instrument of the present invention exhibits an effect that the ink flows smoothly in the ball house, the blurring resistance at the time of writing is improved, and a good drawn line is obtained.

The ballpoint pen includes an instrument where in an ink container (refill) for a ballpoint pen accommodated are the aqueous ink composition for a writing instrument having the above-mentioned composition and, as an ink follower, a material that is not compatible with the aqueous ink composition accommodated in the ink container and has a smaller specific gravity than the aqueous ink composition, for example, polybutene, silicone oil, and mineral oil. For example, the ballpoint pen can be produced by filling the aqueous ink composition for a writing instrument in an aqueous ballpoint pen body including a ballpoint pen tip having a ball with a diameter of preferably 0.18 to 2.0 mm.

Regarding the shape of the ballpoint pen tip, as illustrated in FIG. 1, when the diameter of a ball house 20 which is a space accommodating a ball 10 in a direction passing through the center of the ball 10 and perpendicular to the axial direction is A and the diameter of the ball 10 is B, the minimum portion (A-B)/2 of the clearance serving as an ink flow path in the ballpoint pen tip is preferably in a range of 5 to 30 pm and more preferably in a range of 10 to 25 µm. When the minimum clearance (A-B)/2 of the ink flow path in the ballpoint pen tip exceeds 30 µm, the flow rate of the ink becomes too high and bleeding of the drawn line appears, which is not preferable.

Further, when writing is performed on a surface-treated paper such as a sticky note or a coated paper, a paper slip phenomenon is highly likely to occur. In a normal writing operation, writing is performed by pulling the pen shaft, but when writing is performed by pushing the pen shaft in the opposite direction (so-called push-writing), this phenomenon is particularly likely to occur. In the ballpoint pen using the aqueous ink composition for a writing instrument of the present invention, blurring of handwriting is prevented even at the time of push-writing.

The ballpoint pen using the aqueous ink composition for a writing instrument of the present invention is also excellent in resistance to blurring when left to stand.

The aqueous ink composition for a writing instrument of the present invention constituted as described above, including at least the colorant (A) containing a pigment, the olefin-based resin particles (B), and water, wherein the olefin-based resin particles (B) has a penetration method hardness of 1 or more and an average particle size of 15 um or less as measured by a Coulter counter method, and a solid content mass ratio [(A)/(B)] between the colorant (A) and the olefin-based resin particles (B) is in a range of 1 to 100, can provide a handwriting formed by writing on a writing surface, which is capable of withstanding repeated scratching and scratching with a stronger force, and does not have blurring or poor appearance due to generation of bubbles at the time of writing, the writing surface including a normal writing surface and a paper surface or the like through which aqueous ink hardly permeates, such as an ink jet postcard paper or a slightly coated paper.

It is presumed that the reason why the aqueous ink composition for a writing instrument of the present invention constituted as described above and the writing instrument charged with the aqueous ink composition exhibit the above-described specific action on a writing surface such as an ink jet postcard paper or a slightly coated paper through which aqueous ink hardly permeates is that the olefin particles present on the surface of the drawn line coating film improve the slidability and reduce the frictional resistance of the drawn line.

It is also presumed that whether the aqueous ink composition for a writing instrument of the present invention and the writing instrument charged with the aqueous ink composition do not cause blurring and poor appearance at the time of writing due to generation of bubbles is related to the following action mechanism. That is, in the present invention, the included olefin-based resin particles (B) having the above-described characteristics trap minute bubbles generated in the ink composition and prevent the bubbles from being combined and becoming larger. It is presumed that this mechanism works because the olefin-based resin particles having the above-described characteristics have hydrophobic properties and are relatively easily adsorbed to the gas-liquid interface between the ink and the bubbles generated by a shock of dropping of the writing instrument or an impact of a retractable ballpoint pen, which exerts an effect of preventing the bubbles from directly contacting each other and being combined. In particular, in the case of self-dispersion type olefin-based resin particles, since there is no steric hindrance, the particles are more easily adsorbed to the gas-liquid interface and the effect is likely to be obtained.

Further, the polyolefin resin particles used in the present invention have a penetration method hardness of 1 or more. Even when the ink is dried at the pen tip, a flexible coating film is likely to be formed, and the effect of preventing the generation of bubbles can be exerted without affecting the blurring at the time of writing.

The aqueous ink composition for a writing instrument of the present invention and a writing instrument charged with the aqueous ink composition are extremely excellent in the long-lasting effect for exhibiting the effect of the present invention. The effect lasts long and stability over time is excellent, because the ink composition is aqueous composition.

### Examples

Next, the present invention will be described in more detail with reference to Examples 1 to 8 and Comparative Examples 1 to 4 of an aqueous ink composition for a writing instrument and a writing instrument charged with the aqueous ink composition, but the present invention is not limited to the following Examples and the like.

### [Examples 1 to 8 and Comparative Examples 1 to 4]

Each aqueous ink composition for a writing instrument was prepared by a known method according to the formulation including each colorant (A), olefin-based resin particles (B) having each characteristics (penetration method hardness and average particle size measured by a Coulter counter method), water-soluble solvent, and the like listed in the following Table 1.

For each of the obtained aqueous ink compositions for a writing instrument (total amount: 100 mass%), the viscosity (mPa ·s) at a shear rate of 383 sec⁻¹ (25°C), the surface tension, the dissolved oxygen concentration were measured by the following methods. A writing instrument having the following configuration was produced, and scratch resistance and blurring resistance were evaluated by the following evaluation methods.

These results are shown in Table 1 below.

### [Method for Measuring Viscosity at Shear Rate of 383 sec⁻¹ (25°C) and Surface Tension]

The ink viscosity (mPa·s) at a shear rate of 383 sec⁻¹ was measured at a measurement temperature of 25°C using the EMD type viscosimeter (available from TOKYO KEIKI INC.).

The surface tension (25°C) was measured with a surface tension measuring apparatus: CBVP-Z available from Kyowa Interface Science Co., Ltd.

### (Method for Measuring Dissolved Oxygen Concentration)

The dissolved oxygen concentration %O₂ was measured at a measurement temperature of 25°C using a needle type oxygen concentration meter MicroxTX3 (available from PreSens Precision Sensing GmbH) . The "%O₂" indicates the oxygen concentration of the air dissolved in the ink.

### (Ballpoint Pen)

Using a shaft of a retractable ballpoint pen [available from Mitsubishi Pencil Co., Ltd., trade name: uni-ball SigNo RT], each of the aqueous ink compositions for a writing instrument obtained above was filled in a refill comprising a polypropylene ink container having an inner diameter of 3.8 mm and a length of 113 mm, a ballpoint pen tip (holder: made of stainless steel, ball: cemented carbide ball, ball diameter: 0.5 mm), and a joint connecting the container tube and the tip, in which the diameter of each ink follower was each inner diameter, and the ink follower made of polybutene was filled in an ink rear end, whereby a ballpoint pen (5 pieces for each) was produced. The values of the minimum clearance [(A-B)/2] in the ballpoint pen tip conforming to FIG. 1 in the retractable ballpoint pen are listed in Table 1.

### <Evaluation Method of Scratch Resistance>

Circles were written on the surface of coated paper (trade name: New YUPO 80, available from Yupo Corporation) by using the ballpoint pen, and the handwriting was dried. The handwriting was scratched five times by moving a Kimwipe on which a 500 g weight was placed, and the scratch resistance of the handwriting was evaluated according to the following evaluation criteria.

### Evaluation criteria:

A: When observed after the test, no peeling occurs in the handwriting.
B: When observed after the test, slight peeling occurs in the handwriting, but most of the handwriting remains.
C: When observed after the test, peeling occurs and few handwriting remains.

### <Evaluation Method of Bubble Generation>

After the above retractable aqueous ballpoint pen was left to stand in an environment at a temperature of 5°C for one month and left to stand in an environment at a temperature of 25°C for one day, a knock operation was performed 20 times in a state where the pen tip was directed downward. After the pen was left in an environment of 25°C for one week, the presence or absence of bubble generation in the ink composition in the refill was evaluated based on the following criteria.

### Evaluation criteria:

A: No bubbles are observed.
B: One bubble having a diameter of less than 0.5 mm is observed.
C: Bubbles having diameters of 0.5 mm or more and less than 1 mm are observed.
D: Bubbles having diameters of 1 mm or more are observed.

### <Evaluation of Push Writing Blurring (Paper Sliding Resistance) Property>

A ballpoint pen produced under the conditions of a temperature of 25°C and a humidity of 65% was set in a writing tester, and was pressed against the surface of coated paper (trade name: New YUPO 80, available from Yupo Corporation) at an angle of 70° and a load of 40 g, and writing was performed by moving the ballpoint pen so as to push it in an obtuse angle direction (that is, a direction of 110°) at 100 mm/min for 2.5 minutes, and the state of the drawn line was observed.

### Evaluation criteria:

A: The distance of the drawn line by writing is 200 mm or more, and writing was performed without causing a paper slip phenomenon.
B: The distance of the drawn line by writing is 125 mm or more and less than 200 mm.
C: The distance of the drawn line by writing is 75 mm or more and less than 125 mm.
D: The distance of the drawn line by writing is less than 75 mm.

### <Evaluation Method of Blurring Resistance>

The retractable ballpoint pen was left to stand in an environment at a temperature of 5°C for one month and then in an environment at a temperature of 25°C for one day, and then a knock operation was performed 20 times in a state where the pen tip was directed downward. The presence or absence of blurring resistance was evaluated based on the following criteria by writing a spiral having a diameter of 2 cm on writing paper.

### Evaluation criteria:

A: The drawn lines are good.
B: Slight blurring is observed on the drawn line as writing was continued, but the blurring was improved as writing was further continued.
C: Noticeable blurring is observed on the drawn line as writing was continued, and the blurring was not improved even when writing was further continued.

**[Table1]**

| <Ink composition> | | | | | | | | | | | | | (wt) |
|---|---|---|---|---|---|---|---|---|---|---|---|---|---|
| Components | | Examples | | | | | | | | Comparative Examples | | | |
| | | 1 | 2 | 3 | 4 | 5 | 6 | 7 | 8 | 1 | 2 | 3 | 4 |
| Colorant (A) | Pigment FUJI RED 2510 (Fuji Pigment Co., Ltd.) | 8 | | | | 8 | | | | 8 | | 8 | |
| | Aluminum pigment EMR-D6270 (Toyo Aluminum) | | 7 | | | | | | | | 7 | | |
| | Colored resin particle pigment C-800 black **(average particle size** 6 µm, **Negami Kogyo Co., Ltd.)** | | | 20 | | | 20 | 30 | | | | | 20 |
| | Thermochromic microcapsule pigment black **(average particle size 0.55 µm)** | | | | 15 | | | | 24 | | | | |
| Pigment Dispersant | JONCRYL 63J (BASF JAPAN) | 3 | | | | 3 | | | | | | | |
| Olefin-based resin particles (B) | CHEMIPEARL W100 **(particle size 3 µm, penetration method hardness 1)** | 4 | | | 5 | | | | | | | 0.05 | |
| | CHEMIPEARL W100 **(particle size 6 µm, penetration method hardness 10)** | | | | | | 4 | | 0.4 | | | | |
| | CHEMIPEARL W500 **(particle size 2.5 µm, penetration method hardness 10)** | | 2 | | | | | 1 | | | | | |
| | CHEMIPEARL W400 **(particle size 4 µm, penetration method hardness 3)** | | | 2 | | 3 | | | | | | | |
| | CHEMIPEARL W300 **(particle size 3 µm, penetration method hardness less than 1)** | | | | | | | | | 5 | | | |
| | CHEMIPEARL W308 **(particle size 8 µm, penetration method hardness less than 1)** | | | | | | | | | | 0.05 | | 5 |
| pH adjuster | Triethanolamine | 0.1 | 0.1 | 0.1 | 0.1 | 0.1 | 0.1 | 0.1 | 0.1 | 0.1 | 0.1 | 0.1 | 0.1 |
| Thickener | Xanthan gum *1 | 0.3 | 0.3 | 0.3 | 0.3 | 0.3 | 0.3 | 0.3 | 0.3 | 0.3 | 0.3 | 0.3 | 0.3 |
| Corrosion inhibitor | Benzotriazol | 0.3 | 0.3 | 0.3 | 0.3 | 0.3 | 0.3 | 0.3 | 0.3 | 0.3 | 0.3 | 0.3 | 0.3 |
| Preservative | Benzoisothiazone *2 | 0.3 | 0.3 | 0.3 | 0.3 | 0.3 | 0.3 | 0.3 | 0.3 | 0.3 | 0.3 | 0.3 | 0.3 |
| Lubricant | Phosphate *3 | 0.3 | 0.3 | 0.3 | 0.3 | 0.3 | 0.3 | 0.3 | 0.3 | 0.3 | 0.3 | 0.3 | 0.3 |
| Dispersion medium | Glycerin | 10 | 10 | 10 | 10 | 10 | 10 | 10 | 10 | 10 | 10 | 10 | 10 |
| Bubble inhibitor | Ascorbic acid | 0.1 | 0.2 | 0.03 | 0.05 | 0.15 | 0.02 | 0.1 | 0.1 | 0.03 | 0.2 | 0.01 | 0.3 |
| Water | Distilled water | 73.7 | 79.7 | 66.7 | 68.7 | 74.7 | 64.7 | 57.7 | 64.3 | 75.7 | 81.65 | 80.65 | 63.7 |
| Solid content mass ratio [(A)/(B)] of colorant (A) and olefin-based resin particles (B) | | 20 | 3.5 | 100 | 30 | 2.7 | 5.0 | 300 | 60.0 | 1.6 | 140 | 160 | 4.0 |
| Viscosity (mPa·s : 25°C) | | 20 | 28 | 23 | 18 | 24 | 29 | 34 | 29 | 19 | 20 | 25 | 27 |
| Surface tension (mN/m: 25°C) | | 38.1 | 39.5 | 37.5 | 38.3 | 37.9 | 39.1 | 38.9 | 38.5 | 38.8 | 39.0 | 37.7 | 37.5 |
| Dissolved oxygen concentration (%O₂, 25°C) | | 12.1 | 8.5 | 16.3 | 14.8 | 7.9 | 18.5 | 10.7 | 10.5 | 17.5 | 8.9 | 19.8 | 4.1 |
| Minimum clearance (A-B)/2 in ballpoint pen tip | | 15 | 15 | 15 | 15 | 15 | 15 | 15 | 15 | 15 | 3 | 3 | 3 |
| Evaluation of ink composition | Bubble generation | A | A | B | A | A | B | B | B | B | A | D | A |
| | Scratch resistance | A | A | A | A | A | A | A | A | C | C | C | C |
| | Push-writing blurring (paper sliding) property | A | A | A | A | A | A | A | A | D | D | C | C |
| | Blurring resistance | A | A | A | A | A | A | A | A | C | C | B | C |

| | | | | | | | | | | | | | |
|---|---|---|---|---|---|---|---|---|---|---|---|---|---|
| *1: KELZAN S [available from Sansho Co., Ltd.] *2: BIODEN 421 [available from Daiwa Chemical Industries Co., Ltd.] *3: RB-410 [available from TOHO Chemical Industry Co., Ltd.], polyoxyethylene oleyl ether phosphate | | | | | | | | | | | | | |

As is clear from the results shown in Table 1 above, the ballpoint pens charged with the ink compositions for a writing instrument of Examples 1 to 8 falling within the scope of the present invention can provide handwriting formed by writing which is capable of withstanding repeated scratching and scratching with a stronger force, as compared with Comparative Examples 1 to 4 falling outside the scope of the present invention. In addition, it is confirmed that the aqueous ink composition for a writing instrument and the ballpoint pen charged with the aqueous ink composition did not cause blurring during writing.

### Industrial Applicability

An aqueous ink composition for a writing instrument suitable for, for example, an aqueous ballpoint pen and a marking pen is provided.

## Claims

1. An aqueous ink composition for a writing instrument, the composition comprising, at least:
a colorant (A) containing a pigment;
olefin-based resin particles (B); and
water,
wherein
the olefin-based resin particles (B) have a penetration method hardness of 1 or more and an average particle size of 15 µm or less as measured by a Coulter counter method, and
a solid content mass ratio [(A) / (B)] between the colorant (A) and the olefin-based resin particles (B) is in a range of 1 to 100.

2. The aqueous ink composition for a writing instrument according to claim 1, wherein the olefin-based resin particles (B) are contained in an amount of 0.01 to 20 mass% with respect to a total amount of the ink composition.

3. The aqueous ink composition for a writing instrument according to claim 1 or 2, wherein a dissolved oxygen concentration in the aqueous ink composition for a writing instrument is 5%O₂ or more.

4. The aqueous ink composition for a writing instrument according to any one of claims 1 to 3, wherein the composition has a viscosity of 80 mPa·s or less at 25°C under a shear rate of 383 sec⁻¹.

5. The aqueous ink composition for a writing instrument according to any one of claims 1 to 4, wherein the composition has a surface tension of 15 to 60 mN/m at 25°C.

6. A writing instrument charged with the aqueous ink composition for a writing instrument described in any one of claims 1 to 5.

7. A ballpoint pen charged with the aqueous ink composition for a writing instrument described in any one of claims 1 to 5.
